# EUROPÄISCHE PATENTSCHRIFT

(11) **EP 1 989 030 B1**
(45) Veröffentlichungstag und Bekanntmachung des Hinweises auf die Patenterteilung: **08.12.2010**
(21) Anmeldenummer: 06830570.5
(22) Anmeldetag: 12.12.2006
(51) Int. Cl.: B29B 7/76, B08B 1/00

(54) **MISCHKOPF MIT KRIECHSPERRE AM REINIGUNGSKOLBEN**
MIXING HEAD WITH CREEP BARRIER ON THE CLEANING PISTON
TETE DE MELANGE ANTI-FLUAGE POUR PISTON DE NETTOYAGE

(30) Priorität: 24.02.2006 DE 102006009117
(43) Veröffentlichungstag der Anmeldung: 12.11.2008
(73) Patentinhaber: KraussMaffei Technologies GmbH, 80997 München (DE)
(72) Erfinder: BERCHTENBREITER, Ernst, 86438 Kissing (DE)
(74) Vertreter: Zollner, Richard
(86) Internationale Anmeldenummer: PCT/EP2006/069622
(87) Internationale Veröffentlichungsnummer: WO 2007/098815

(56) Entgegenhaltungen:
- EP-A- 0 391 152
- JP-A- 61 187 926
- JP-A- 63 293 020
- US-A1- 4 523 696
- US-A1- 4 778 083

## Beschreibung

Die vorliegende Erfindung betrifft einen Mischkopf gemäß dem Oberbegriff des Anspruchs 1.

Mischköpfe zur Verarbeitung eines reaktiven Materialgemisches aus zumindest zwei miteinander reagierenden Kunststoffkomponenten sind vielfältig bekannt. Die Kunststoffkomponenten werden in eine Mischkammer eingeführt, in der Mischkammer miteinander innig vermischt und an einem Ende der Mischkammer zumeist über ein Auslassrohr ausgetragen. Der Austrag erfolgt in den meisten Fällen in ein Formwerkzeug bzw. die Kavität eines Formwerkzeugs.

Um sicherzustellen, dass in der Mischkammer kein Kunststoffmaterial ausreagiert und diese verklebt, ist oftmals ein Reinigungskolben vorgesehen, der während eines Materialaustrages aus der Mischkammer zurückgezogen ist. Erfolgt nach einem Schusszyklus kein Austrag aus der Mischkammer, so wird der Reinigungskolben in die Mischkammer verfahren und säubert diese. Soll anschließend wieder ein Materialaustrag erfolgen, so wird der Reinigungskolben wiederum zurückgezogen und die so freigewordene Mischkammer wieder bestimmungsgemäß verwendet. Aus diesem Grunde ist der Reinigungskolben reversierbar hin und her beweglich betätigbar. Die Bewegung wird mittels eines Antriebs erzeugt, der an einem Ende des Reinigungskolbens angreift. Die Verbindung zwischen Antrieb und Reinigungskolben ist über einen Schaft hergestellt.

Zwischen dem Reinigungskolben und der Mischkammer bzw. dem nachfolgend zur Mischkammer den Reinigungskolben umgebenden Gehäuse ist zumindest ein Toleranzspalt freizuhalten, der die Hin- und Herbewegung des Reinigungskolbens gestattet. Ein solcher kleinster Toleranzspalt ist abhängig von der verwendeten Materialmischung jedoch oftmals ausreichend, dass sich Kunststoffkomponenten oder das bereits vermischte Materialgemisch entlang dem Reinigungskolben bewegen. Man spricht hier davon, dass dieses Material am Reinigungskolben oder dem sich daran anschließenden Schaft "entlang kriecht". Wird dieser Kriechvorgang nicht unterbunden, so können sich die Kunststoffkomponenten oder das Materialgemisch am Schaft des Reinigungskolbens festsetzen oder entlang des Reinigungskolbens bis zum Antrieb gelangen. Dabei kommt es nicht nur zu Verunreinigungen im Bereich des Mischkopfes. Die Kunststoffkomponenten können auch im Bereich des Antriebs aushärten und zu einem Festsetzen des Reinigungskolbens insgesamt führen. In diesem Falle wäre der Mischkopf funktionsunfähig und müsste wieder Instand gesetzt werden. Unabhängig davon muss das den Reinigungskolben oder dessen Schaft hochkriechende Material meist jeden Tag aufwändig entfernt werden. Besonders problematisch ist dies bei dünnflüssigen und eine lange Reaktionszeit aufweisenden Weichschaummaterialien. Gelangt der Materialschaum in den Antrieb so verunreinigt er das Hydrauliköl, welches sehr kostenintensiv wieder gereinigt werden muss.

Um ein Festsetzen des Reinigungskolbens oder des Schafts des Reinigungskolbens zu verhindern ist es bekannt, eine Aussparung im Gehäuse, in dem der Reinigungskolben oder der Schaft geführt ist, anzuordnen, so dass das unweigerlich entlangkriechende Material nach dem Aushärten zu keiner Funktionsunfähigkeit der gesamten Vorrichtung führt. Diese oftmals zu mindestens zwei Seiten offene Aussparung, auch Glocke genannt, verhindert jedoch nicht das Hochkriechen, sondern ermöglich vielmehr die manuelle Reinigung und Verhindert das unmittelbare Festsetzen.

Bekannt ist es auch die Glocke und somit den Schaft des Reinigungskolbens mit einer Vorrichtung zu spülen. Doch ist dies zum einen aufwändig, zum anderen kann ein Hochkriechen und Aushärten des Schaummaterials oftmals nicht vollständig verhindert werden.

In der DE 35 22 618 A1 ist ein Mischkopf für die Herstellung eines fließfähigen Kunststoffes beschrieben, bei dem ein Ausstoßerkolben in einer Mischkammer hin- und herverschieblich geführt ist. Der Ausstoßerkolben ist an einem Ende mit dem abgegrateten Schaft eines Antriebs verbunden, wobei beim Übergang von Ausstoßerkolben zum Schaft eine Stufe vorhanden ist.

In der DE 36 18 395 A1 ist eine Vorrichtung zum Herstellen eines massiven oder geschäumten Kunststoff bildenden Reaktionsgemisches bekannt, bei dem gleichfalls ein Ausstoßkolben in einer Mischkammer hin- und herbeweglich geführt ist. Auch hier schließt sich an den Ausstoßkolben ein dickerer Schaft eines hydraulischen Antriebs an.

In der EP 391 152 ist ein Mischkopf für reaktive Komponenten beschrieben, der einen kolbenförmigen Reinigungselement umfasst, welches in einer Mischkammer hin- und herbewegt wird. Am oberen Ende des Reinigungselementes ist eine als Anschlag wirkende Erweiterung vorgesehen. Eine weitere, ringförmige Erweiterung ist zentral am Kolben angeordnet. Diese wirkt mit eine Sensor zur Erfassung der Position des Reinigungselementes zusammen.

In keiner der oben genannten Dokumente ist daher das Problem der Verschleppung eines reaktiven Materials über das jeweilige Reinigungselement erörtert oder beschrieben. Auch sind keine Maßnahmen genannt, dieses Problem zu lösen.

Sowohl in der JP 61187926, die einen Mischkopf gemäβ dem Oberbegriff des Anspruchs 1 offenbart, wie auch in der JP 63293020 sind Mischköpfe, die für den Polyurethanbereich verwendet werden können, beschrieben. In beiden Fällen ist der Reinigungskolben integral mit einer Kolbenstange einer Kolben-Zylinder-Antriebseinheit dargestellt, wobei der Übergang vom Reinigungskolben zur Kolbenstange eine durchmessermäßige Erweiterung aufweist.

Es ist daher weiter das Problem gegeben, dass es zu einer Verschleppung des Schaummaterials über den Schaft - auch Kolbenstange genannt - bis in den Hydraulikbereich (Antrieb für den Reinigungskolben) kommt, wodurch die Gefahr der Ölverschmutzung gegeben ist.

Aufgabe der vorliegenden Erfindung ist es, eine Maßnahme vorzusehen, mit der die Kriechbewegung des in der Mischkammer befindlichen Materialgemisches oder darin eingebrachten Kunststoffkomponenten entlang des Reinigungskolbens oder dessen Schaftes bis zum Antrieb unterbunden werden kann und eine leichte Reinigung ermöglicht ist.

Diese Aufgabe wird durch die im Anspruch 1 genannten Merkmale gelöst.

Erfindungsgemäß wird bei einem an sich bekannten Mischkopf am Reinigungskolben oder an dessen Schaft eine ihn umfangsmäßig umgebende, im wesentlichen ringförmige Verdickung (ein rosettenartiger Wulst oder eine durchmessermäßige Erweiterung) vorgesehen, die als Kriechsperre für die Kunststoffkomponenten oder das Materialgemisch wirkt.

Insbesondere in Kombination mit einer Gehäusewandung wird der in den nach außen offenen Freiraum oder die Glocke verschleppte Schaum radial nach außen verdrängt, so dass ein Freiraum für den Schaft (auch Kolbenstange genannt) geschaffen ist, wodurch eine Kontamination oberhalb der Verdickung oder des Wulstes des Schaftes wirksam verhindert werden kann.

Tests haben ein sehr gutes Ergebnis der erfindungsgemäßen Vorrichtung ergeben. Es wurde kein Schaum mehr über die Verdickung oder den Wulst hinaus verschleppt, und das Hydrauliköl musste nicht mehr gereinigt werden.

Die Verdickung kann sowohl integral mit dem Reinigungskolben als auch nachträglich herstellbar sein, indem man ein entsprechendes Element auf den Reinigungskolben aufschiebt, insbesondere aufschrumpft etc. Wichtig in diesem Zusammenhang ist, dass sich die Verdickung oder die Erweiterung, also beispielsweise der Ring, fest am Reinigungskolben oder dessen Schaft befinden und durch die Bewegung des Reinigungskolbens nicht verschoben werden kann.

Die Verdickung wird in einer nach außen offenen Ausnehmung eines Gehäuses hin- und herbewegt. Diese Ausnehmung wird auch als Glocke bezeichnet. Die Ausnehmung ist mischkammerseitig durch eine Wandung begrenzt, mit der eine Flanke der Verdickung zusammenwirkt. Die Verdickung kann dabei in ihrem Querschnitt halbkreis- , dreiecks- oder trapezförmigen Querschnitt aufweisen.

Es hat sich als vorteilhaft erwiesen, wenn die untere Wandung der Verdickung eine größere Steigung als die unterhalb angeordneten Gehäusewandung, mit der sie zusammenwirkt, aufweist, so dass eine radiale Verdrängung nach außen erreicht ist. Dies wird später noch anhand der Beschreibung des Ausführungsbeispiels deutlich.

Die vorliegende Erfindung wird nachfolgend anhand eines Ausführungsbeispiels mit Bezug auf die beiliegenden Zeichnungen näher erläutert. Die Zeichnungen zeigen in
- Figur 1: eine schematische Darstellung eines Mischkopfes mit erfindungsgemäß ausgestaltetem Reinigungskolben,
- Figur 2: eine schematische Darstellung eines Mischkopfes wie in Figur 1, jedoch mit verschobenem Reinigungskolben,
- Figur 3a: ein schematischer Detailquerschnitt mit dem erfindungsgemäß ausgebil- deten Reinigungskolben, anhand dessen die Wirkung der Erfindung er- läutert werden kann,
- Figur 3b: ein schematischer Detailquerschnitt wie Figur 3a, jedoch mit nach oben verschobenen Reinigungskolben,
- Figur 4: ein Detailquerschnitt des Wulstes des Reinigungskolben, in dem der Winkel der unteren Stirnwand zu erkennen ist und
- Figur 5: eine schematische Detailansicht einer anderen Ausführungsform eines erfindungsgemäßen Reinigungskolbens.

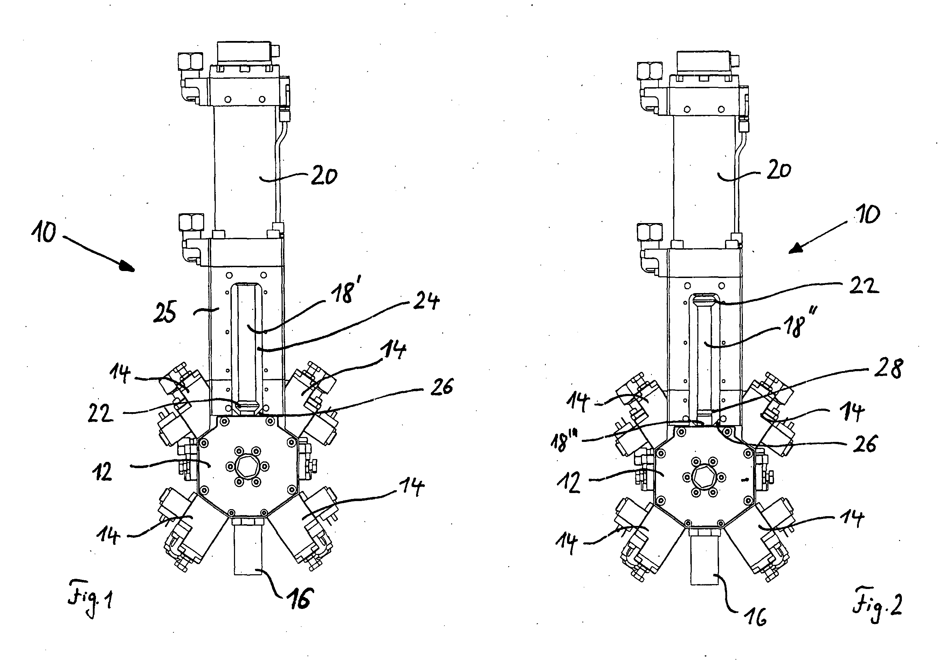

Der in den Figuren 1 und 2 dargestellte Mischkopf 10 umfasst eine Mischeinrichtung 12, in der eine Mischkammer (vorliegend nicht dargestellt) ausgebildet ist. Zudem sind an der Mischeinrichtung 12 vier Einspritzdüsen 14 angeordnet, mit denen Kunststoffmaterial oder Zusatzstoffe in die Mischkammer eingebracht werden können.

Am unteren Ende der Mischkammer ist ein Auslassrohr 16 angeordnet, über welches das in der Mischkammer erzeugte Materialgemisch aus dem Mischkopf 10 ausgebracht werden kann. Die Mischkammer kann durch einen Reinigungskolben 18''' gereinigt werden, der in Figur 1 nach unten verschoben ist, so dass der Reinigungskolben in der Mischkammer aufgenommen ist und diese säubert. In Figur 1 ist lediglich ein oberer Teil 18' des Schaftes des Reinigungskolbens 18''' zu erkennen. Der Reinigungskolben 18''' wird von einem Antrieb 20, der vorliegend hydraulisch ausgebildet ist, hin und her beweglich beaufschlagt.

Die Darstellung der Figur 2 unterscheidet sich dadurch von derjenigen in Figur 1 dadurch, dass der Reinigungskolben 18 nunmehr zurückgezogen ist, so dass die Mischkammer freigegeben wurde. In diesem Zustand können die Ausgangsmaterialien über die Einspritzdüsen 14 in die Mischkammer verbracht, dort vermischt und über das Auslassrohr 16 ausgetragen werden. In Figur 2 ist der untere Teil 18" des Schaftes zu erkennen. Unmittelbar darunter schließt sich der Reinigungskolben 18''' an, von dem in Figur 2 noch ein kleiner Teil zu sehen ist.

Der obere Teil 18' und der untere Teil 18" des Schaftes werden optisch durch einen ringförmigen Wulst 22 getrennt. Dieser dient - wie nachfolgend noch erläutert wird - als Kriechsperre. In Figur 1 ist der Wulst 22 in einer unteren Position zu sehen, da der Reinigungskolben 18 vorverfahren ist. In Figur 2 ist der Wulst 22 in einer zurückgezogenen Position dargestellt, da der Reinigungskolben 18''' zurückverfahren ist.

Der ringförmige Wulst 22 ist in einer Ausnehmung 24 eines Gehäuses 25 des Mischkopfes hin- und her beweglich aufgenommen. Diese auch als Glocke bezeichnete Ausnehmung 24 dient zur Aufnahme von Schaummaterial und ermöglicht dem Wulst einen ausreichenden Bewegungsspielraum. Das untere Ende der Ausnehmung 24 ist durch eine konisch verlaufende Wandung 26 des Gehäuses 25 definiert. Alternativ kann dieser Teil auch anders ausgeführt werden. Beispielsweise ist es möglich, den konischen Teil als Teil des Kopfstückes auszuführen oder auch ganz wegzulassen und diese Wandung eben auszuführen.

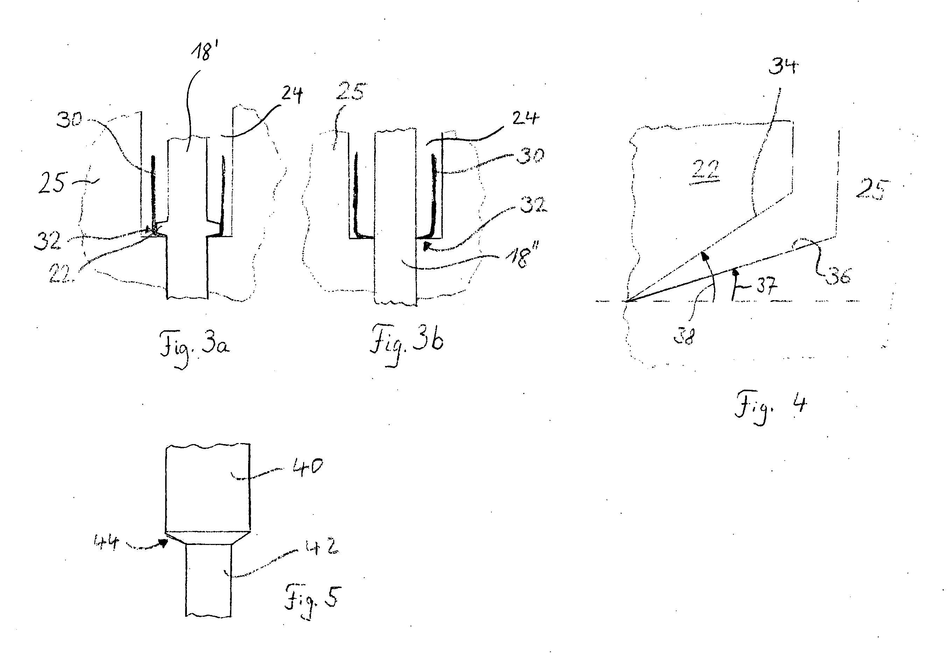

Die Wirkung des ringförmigen Wulstes 22 wird nachfolgend anhand der Figuren 3a und 3b erläutert:

Der Reinigungskolben 18''' ist zwangsläufig von Weichschaummaterial umgeben, der in den Ringspalt zwischen Mischkammer und Reinigungskolben 18''' eindringt. Beim nach oben Verfahren des Reinigungskolbens 18''' wird dieses Material nach oben verschleppt. Aufgrund der Reibungseffekte sowie des ständig nachdrängenden Materials kriecht das Schaummaterial über die zyklusweise Bewegung des Reinigungskolbens entlang des Reinigungskolbens nach oben. Fährt der Reinigungskolben 18''' nach unten, so wird das Schaummaterial am Gehäuseeinlass für den Schaft 18" abgestreift und der Wulst 22 drängt es in Zusammenwirkung mit der konisch ausgebildeten Wandung 26 radial nach außen (Bezugsziffer 32). Beim nächsten Zyklus wird erneut Material radial nach außen verdrängt, so dass das bei den vorherigen Zyklen verdrängte Material nach oben geschoben wird. Dadurch bildet sich eine zylinderförmige Schaumaterialschicht (Schlauch) 30 aus, die in Figur 3a abgebildet und mit der Bezugsziffer 30 bezeichnet ist.

Dieser Schlauch 30 wächst bei jedem Bewegungsschritt nach unten geringfügig nach oben. Aufgrund der Verdickung ist er jedoch radial vom oberen Teil 18' des Schaftes beabstandet, was insbesondere in Figur 3b, in welcher der Reinigungskolben 18''' wieder nach oben verfahren ist, zu erkennen ist. Damit wird der oberen Teil 18' des Schaftes nicht berührt und kann damit auch nicht kontaminieren werden. Auf diese Weise bleibt der obere Teil 18' des Schaftes sauber, und es kann kein Material über den Schaft 18' nach oben verschleppt werden.

Der Schaummaterialschlauch wird bei einer entsprechend langen Ausbildung, z.B. einmal am Tag, entfernt. Da der Schaummaterialschlauch nicht am Schaft 18' angeklebt ist, sondern vielmehr im "Freien" steht, ist das Entfernen sehr leicht durchzuführen.

Sinnvoll ist es, wie in Figur 4 gezeigt, die untere Stirnwand des Wulstes 22 mit einer Steigung auszubilden (Pfeil 38), die steiler ist als die Steigung (Pfeil 37) der Gehäusewandung 36, mit welcher der Wulst 22 zusammenwirkt. Dies fördert die radiale Verdrängung.

Möglich ist es auch, wie in Figur 5 dargestellt, den Schaft des Reinigungskolbens einfach von einem schmäleren 42 zu einem dickeren 40 Teil radial zu erweitern (Bezugszeichen 44). Auch diese konische Erweiterung kann den Verdrängungseffekt herbeiführen. Allerdings ist in diesem Fall nicht gewährleistet, dass der obere Teil 40 nicht mit dem so ausgebildeten Materialschlauch in Kontakt kommt. Hier ist es zweckmäßiger diesen Teil radial etwas rückspringend auszubilden.

Mit der vorliegenden Erfindung kann auf wirksame Weise ein Eindringen von reaktiven Kunststoffkomponenten in den Antrieb verhindert werden, was insgesamt zur Betriebssicherheit und zur Langlebigkeit des Mischkopfes beiträgt.

## Patentansprüche

1. Mischkopf für die Verarbeitung eines reaktiven Materialgemisches aus zumindest zwei miteinander reagierenden Kunststoffkomponenten umfassend eine Mischeinrichtung (12) mit einer Mischkammer, in der ein Reinigungskolben (18) reversierbar hin- und herführbar angeordnet ist,
**dadurch gekennzeichnet,**
**dass** der Reinigungskolben (18"') oder ein mit dem Reinigungskolben verbundener Schaft (18") eine ihn umfangsmäßig umgebende, im wesentlichen ringförmig ausgebildete Verdickung (22) aufweist, die mit einer Gehäusewandung (26) zur Verdrängung eines Materialgemisches nach außen zusammenwirkt,
**dass** die Verdickung (22) in einer Ausnehmung (24) eines Gehäuses (25) zusammen mit dem Reinigungskolben oder dem Schaft hin- und herbewegbar ist und dass die Verdickung (22) eine Flanke (34) aufweist, die steiler ist, als die Wand (36) des Gehäuses (25), so dass überschüssiges Material radial nach außen ausgepresst wird.

2. Mischkopf nach Anspruch 1,
**dadurch gekennzeichnet,**
**dass** die Verdickung (22) beim Verfahren des Reinigungskolbens (18''') in die Mischkammer hinein bis nahe an die Gehäusewandung (26) des den Reinigungskolben oder den Schaft aufnehmenden Gehäuses fahrbar ist.

3. Mischkopf nach Anspruch 1 oder 2,
**dadurch gekennzeichnet,**
**dass** die ringförmige Verdickung einen im wesentlichen halbkreis, dreiecks- oder trapezförmigen Querschnitt aufweist.

4. Mischkopf nach einem der vorhergehenden Ansprüche,
**dadurch gekennzeichnet,**
**dass** die ringförmige Verdickung (22) integral mit dem Reinigungskolben (18''') ausgebildet ist.

5. Mischkopf nach einem der vorhergehenden Ansprüche 1 bis 3,
**dadurch gekennzeichnet,**
**dass** ein Ring auf den Reinigungskolben (18''') aufgeschoben, insbesondere aufgeschrumpf ist.

## Claims

1. A mixing head for the processing of a reactive material mixture of at least two plastics components which react with each other, comprising a mixing device (12) with a mixing chamber, in which a cleaning piston (18) is reversibly arranged so that it can be moved to and fro,
**characterized in that**
the cleaning piston (18''') or a shaft (18") connected with the cleansing piston has a thickened region (22), surrounding it peripherally, constructed substantially in an annular shape, which cooperates with a housing wall (26) to displace a material mixture towards the exterior, the thickened region (22) is movable to and fro in a recess (24) of a housing (25) together with the cleaning piston or the shaft, and the thickened region (22) has a flank (34) which is steeper than the wall (36) of the housing (25), so that excess material is pressed out, radially towards the exterior.

2. The mixing head according to Claim 1,
**characterized in that**
the thickened region (22), on the moving of the cleaning piston (18''') into the mixing chamber, is able to be moved close up to the housing wall (26) of the housing receiving the cleaning piston or the shaft.

3. The mixing head according to Claim 1 or 2,
**characterized in that**
the annular thickened region has a substantially semicircular, triangular or trapezoidal cross-section.

4. The mixing head according to one of the preceding claims,
**characterized in that**
the annular thickened region (22) is constructed integrally with the cleaning piston (18''').

5. The mixing head according to one of the preceding claims 1 to 3,
**characterized in that**
a ring is pushed, in particular shrink-fitted, onto the cleaning piston (18''').

## Revendications

1. Tête de mélange destinée au traitement d'un mélange de matériaux réactif composé au moins de deux composants synthétiques réagissant l'un avec l'autre, comprenant un dispositif de mélange (12) avec une chambre de mélange dans laquelle est placé un piston de nettoyage (18) mobile en va-et-vient de manière réversible, **caractérisée en ce que** le piston de nettoyage (18''') ou une tige (18'') reliée au piston de nettoyage présente un épaississement (22) formé de manière essentiellement annulaire et l'entourant sur son périmètre qui coopère avec une paroi de logement (26) pour repousser un mélange de matériaux vers l'extérieur, **en ce que** l'épaississement (22) est mobile en va-et-vient avec le piston de nettoyage ou la tige dans un évidement (24) d'un logement (25) et que l'épaississement (22) présente un flanc (34) qui est plus abrupt que la paroi (36) du logement (25), de façon a ce que le matériau en excès soit comprimé radialement vers l'extérieur.

2. Tête de mélange selon la revendication 1, **caractérisée en ce que** l'épaississement (22) peut être entré dans la tête de mélange jusque proche de la paroi de logement (26) du logement recevant le piston de nettoyage ou la tige, lorsque le piston de nettoyage (18''') est déplacé.

3. Tête de mélange selon la revendication 1 ou 2, **caractérisée en ce que** l'épaississement annulaire présente une section essentiellement semi-circulaire, triangulaire ou trapézoïdale.

4. Tête de mélange selon l'une des revendications précédentes, **caractérisée en ce que** l'épaississement (22) annulaire est formé intégralement avec le piston de nettoyage (18''').

5. Tête de mélange selon l'une des revendications précédentes 1 à 3, **caractérisée en ce qu'**une bague est enfilée, en particulier sertie, sur le piston de nettoyage (18''').
